# EUROPEAN PATENT SPECIFICATION

(11) **EP 2 132 145 B1**
(45) Date of publication and mention of the grant of the patent: **04.04.2012**
(21) Application number: 08709641.8
(22) Date of filing: 22.02.2008
(51) Int. Cl.: C02F 1/66, C01F 5/14, C01F 5/16, C01F 11/02

(54) **COMPOSITION FOR THE TREATMENT OF ACIDIC WASTE WATER**
ZUSAMMENSETZUNG ZUR BEHANDLUNG VON SAUREM ABWASSER
COMPOSITION DESTINÉE AU TRAITEMENT DES EAUX USÉES ACIDES

(30) Priority: 23.02.2007 GB 0703569
(43) Date of publication of application: 16.12.2009
(73) Proprietor: Omex Environmental Ltd, Norfolk PE30 2HH (GB)
(72) Inventor: FOX, Marcus Arthur, Lincoln Lincolnshire LN6 0HL (GB); YOUNG, Paul Anthony, Lincoln Lincolnshire LN3 5TP (GB); GREEN, Angela Denice, King's Lynn Norfolk PE30 2HH (GB)
(74) Representative: Loven, Keith James
(86) International application number: PCT/GB2008/050121
(87) International publication number: WO 2008/102180

(56) References cited:
- WO-A-96/03346
- WO-A-98/33743
- WO-A-98/51614
- DE-A1- 4 302 539
- JP-A- 2003 251 371

## Description

### Field of the Invention

This invention relates to a method for the preparation of a composition for the treatment of acidic waste water.

### Background to the Invention

Conventionally, lime (calcium oxide, or calcium hydroxide when hydrated) and caustic soda (sodium hydroxide) are used to neutralise acidic waste water. However, each of these materials is strongly corrosive and can be harmful if not handled with great care. Safer alternatives have been considered, such as magnesium hydroxide, but these have not achieved a sufficiently high pH to precipitate certain metal pollutants found in industrial waste water. A pH in the range 10.5 to 11 is typically required. The simple addition of lime or caustic soda to magnesium hydroxide to increase the pH reintroduces the safety problems which are sought to be avoided.

WO96/03346 discloses the production of magnesium hydroxide slurries by mixing magnesium oxide with water. A small proportion of calcium oxide can be present.

WO98/51614 discloses the addition of calcium oxide during the manufacture of a magnesium hydroxide slurry.

### Summary of the Invention

The invention comprises a method for the preparation of a composition for the treatment of acidic waste water, comprising reacting magnesium oxide and calcium oxide together and is characterised by:
(a) pre-heating the water to a temperature in the range of 38°C to 60°C;
(b) adding the calcium oxide to the water;
(c) stirring the calcium oxide and water;
(d) adding the magnesium oxide to the stirred calcium oxide and water;
(e) continuing to stir the resultant mixture while the mixture reaches boiling point; and
(f) subsequently cooling the composition..

The invention further comprises treating acidic waste water with a composition produced by a method as defined in the preceding paragraphs.

### Detailed Description of the Embodiments

The properties of the composition are very different from its components in isolation or mixtures of them. It is possible to have up to 65% solids in the composition and still have a relatively low viscosity (less than 50% of that of a simple mixture of the ingredients - typically around 4Pa.s), whereas with a simple mixture of the individual ingredients it is impossible to achieve a concentration of much above 40% without serious detriment to the flow properties. The low viscosity achieved is believed to be due to the reaction method employed.

Experimental batches of the composition were made under laboratory conditions and samples were taken to investigate their properties. It was found difficult to achieve the required reaction with starting materials to give a mixture in the preferred proportion 40-50% Mg(OH)₂ and 10% Ca(OH)₂ with conventional laboratory mixers because there was not enough energy produced. However, it was soon established that the use of a pillar drill and a saw-toothed mixer provide adequate mixing. On that basis, the following formulation was made.

**Mix 1**

| | |
|---|---|
| MgO | 1450.00g |
| CaO | 400.00g |
| Water | 3150.00g |

This is equivalent to approximately 42% magnesium hydroxide, 10.6% calcium hydroxide and the balance water.

### Method

Cold water was weighed into a mixing tub and was set stirring. The CaO was added first, followed by the MgO. The temperature was observed to rise from 12°C to 30°C over a period of about 2 hours. The mix was left for a further hour, maintaining the mixing, and the temperature began to fall. At this stage, the mix was tested for strength by dried weight, with the following results:

| | |
|---|---|
| Strength | 42.4% |
| Specific Gravity (SG) | 1.38 |

On pouring the mix out of the mixing vessel it was found that most of the CaO had not completely reacted. It was considered that this mix was too weak and no further tests were done. However, on investigation, it was found that if the mixing process was started with an increased water temperature, this could aid the hydration process. The ideal temperature at which hydration occurs was found to be between 80°C and 100°C. A second trial mix was then carried out.

**Mix 2**

| | |
|---|---|
| MgO | 1535.00g |
| CaO | 420.00g |
| Water at 50°C | 3045.00g |

This is equivalent to approximately 44.4% magnesium hydroxide, 11.1 % calcium hydroxide and the balance water.

### Method

Water pre-heated to a temperature of 50°C was put into the mixer, then the CaO was added. This was stirred for approximately 5 minutes, during which time the temperature rose to 65°C. The MgO was then added and mixed for a further 30 minutes, at which time the temperature rose to 68°C and a sample was taken for testing. A further 30 minutes mixing was allowed, at which time the temperature was found to be 60°C, whereupon the mixing was stopped. The sample was still a little gritty as a result of higher temperatures not being achieved in the laboratory set-up.The produced samples were checked for reactivity and strength by reaction with both HCl solution and H₂SO₄ solution. Portions of magnesium hydroxide and calcium hydroxide were mixed together in the laboratory and this was used as a control to check the mixed oxides. The composition of the control mix and the formulation of the acid solutions are summarised below.

**Lab Mix Control**

| | |
|---|---|
| Mg(OH)₂ | 43.30 g |
| Ca(OH)₂ | 6.66 g |
| Water | 50.04 g |

### Acid Solution Preparation Hydrochloric Acid

| | |
|---|---|
| Hydrochloric Acid Concentrated | 1.0 ml |
| Water to make up to | 1 litre |

**Sulphuric Acid**

| | |
|---|---|
| Sulphuric Acid Concentrated | 1.0 ml |
| Water to make up to | 1 litre |

**Table 1**

| | **Lab Mix Control** | **Mix 2 @1 hour** | **Mix 2 @1.5 hour** |
|---|---|---|---|
| Dried Weight | 49.9% | 45.1% | 46.2% |
| S.G. | 1.45 | 1.40 | 1.41 |
| Usage HCl Solution | 0.45g/l | 0.44g/l | 0.42g/l |
| Usage H₂SO₄ Solution | 1.17g/l | 1.13g/l | 1.17g/l |
| Reaction Time HCl Solution | 21 mins | 23mins | 18mins |
| Reaction Time H₂SO₄ Solution | 10mins | 16.5mins | 12mins |
| Optimum pH | 10.5 | 10.3 | 10.3 |

Having achieved promising results in the laboratory, it was thought that a trial in the existing plant on a commercial scale would be advisable, since it was believed that the energy imparted by the plant would aid the hydration process and achieve the higher temperatures needed to convert the mixed components into the desired composition.

In order to conduct this plant-scale trial, the following proportions of starting materials were used.

### Formulation

| | |
|---|---|
| Magnesium Oxide | 4000kg |
| Calcium Oxide | 1000kg |
| Water | 8500kg |

This is equivalent to approximately 43% magnesium hydroxide, 9.8% calcium hydroxide and the balance water.

### Method

Firstly the water was put into a reaction vessel, followed by the CaO then MgO. The variation in temperature was recorded as follows:

**Table 2**

| | **Time** | **Temperature °C** | **Comment** |
|---|---|---|---|
| 1 | 12.00 | 38 | Heated water |
| 2 | 12.05 | 40 | |
| 3 | 12.20 | 42.7 | |
| 4 | 13.00 | 49 | |
| 5 | 13.25 | 51.8 | |
| 6 | 13.30 | 53 | |
| 7 | 13.35 | 54 | |
| 8 | 13.55 | 58 | |
| 9 | 14.00 | 59 | |
| 10 | 14.05 | 60 | |
| 11 | 14.15 | 63 | |
| 12 | 14.20 | 64 | |
| 13 | 14.25 | 66 | |
| 14 | 14.30 | 67.5 | |
| 15 | 15.00 | 75.8 | |
| 16 | 15.05 | 77.2 | |
| 17 | 15.10 | 79.1 | |
| 18 | 15.15 | 80.1 | |
| 19 | 15.20 | 82.2 | |
| 20 | 15.20 | 83.7 | |
| 21 | 15.30 | 86 | Turbine stopped |
| 22 | 15.35 | 85.5 | 500kg of water added |

The mix continued to heat up, eventually reaching 103°C. The mixing turbine was used intermittently at this stage. The mix turned a beige colour then went white overnight.

The properties of the product of the plant-scale production are reproduced in the table below.

**Table 3**

| | |
|---|---|
| Dried Weight | 51.0% |
| S.G. | 1.43 |
| Usage HCl Solution | 0.28g/l |
| Usage H₂SO₄ Solution | 1.16g/l |
| Reaction Time HCl Solution | 19mins |
| Reaction Time H₂SO₄ Solution | 25.5mins |
| Optimum pH | 10.5 |

The improvement shown by using the plant was evident in the time taken to complete the reaction. It was also observed that this time could be reduced if the starting temperature of the water was higher. It should also be noted that the testing done on the reaction time might change in the presence of effluent.

Production was changed to increase the solids content up to 60% by dried weight, for which the above method is suitable.

In a further variation of the method, approximately 7.5 tonnes of water at 55-60°C was put into a mixing vessel then 1 tonne of lime was added. The mixer was then turned on and the temperature was observed to rise by approximately 30°C. Five tonnes of magnesium oxide was then added, whereupon the temperature rose to approximately 75°C, once all the magnesium oxide had been added. With no heat input, the temperature continued to rise up to boiling point, namely 101-102°C, where it remained boiling for approximately 1 hour. It may be necessary to add more water to compensate for water loss through boiling. In the present trial, water at 70-80°C was added to bring the level back up approximately to the starting level. The initial proportions are approximately equivalent to 52% magnesium hydroxide, 9.5% calcium hydroxide with the balance water.

After this stage, the liquid in the vessel was pumped out to cooling tanks with the stirrer turned off. The temperature at this point was approximately 97-98°C. The mix was allowed to stand overnight. The mixture may boil again during this period.

At this point, the stirrer was started again to ensure proper mixing of the composition and heating coils were activated to keep the mix at a steady 75-90°C to start with, followed by a temperature reduction, regulated by the coils to a final temperature of 25-30°C. The stirring paddles were operating throughout the cooling process. Finally, the mix was pumped out to stirred storage tanks.

### Case Study - Metal Cleaning

A company using hydrochloric acid to clean the surface of steel rods was using 47% sodium hydroxide for effluent treatment. Significant problems were encountered:
- Difficulty in achieving discharge consent levels, particularly for iron and suspended solids.
- Occasional overdosing leading to high pH discharges.
- Storage and handling problems, including freezing of caustic solution during cold weather

A laboratory evaluation was carried out in which 500 ml aliquots of the effluent were treated with caustic soda or the commercial scale production material according to the present invention. The effluent was placed in a one litre beaker fitted with a magnetic stirrer and alkali added. It was found that with the caustic soda a near instantaneous increase in pH occurred, resulting in a colloidal and highly gelatinous precipitate that when transferred to a 500ml settling cylinder, took several hours to settle. When it did settle, the supernatant liquor was still highly coloured with very fine particles that had not settled out.

With the material of the invention, the rise in pH took a minute or so but resulted in a precipitate that was highly coagulated. As soon as the stirrer was switched off, the contents were transferred as before, and rapid settling occurred resulting in a low sludge volume and clear supernatant after only a few minutes. Such an improvement would lead to increased process efficiencies and hence lower costs.

Analysis of the supernatants showed that removal of metal ions with the material of the invention was better, in some cases, than with the caustic soda. This is shown in Table 4.

**Table 4. Laboratory treatment of acidic metal waste water.**

| Dissolved Metal Concentration (mg/l) | | | | | | | |
|---|---|---|---|---|---|---|---|
| | pH | Fe | Zn | Cu | Pb | Cr | Ni |
| Original | 1.14 | 4120 | 43.0 | 2.20 | 0.37 | 17.0 | 7.25 |
| Treated (NaOH) | 9.13 | 1.2 | 0.3 | 0.1 | <0.1 | 0.4 | <0.1 |
| Treated (material of the invention) | 8.90 | 0.4 | <0.1 | <0.1 | <0.1 | <0.1 | <0.1 |

### Viscosity comparison

The viscosity of a sample of the material of the invention was measured using a Brookfield viscometer, and was compared with that of a simple mixture of calcium hydroxide and magnesium hydroxide. The results are given in Table 5 below:

**Table 5. Viscosity measurements.**

| **Sample Ref** | **Speed RPM** | **Spindle** | **Result** |
|---|---|---|---|
| | | | 4020cp |
| Material according to the invention | 5 | 3 | (4.02Pa.s) |
| | | | 9200cp |
| Mixture of Magnesium/Calcium Hydroxide | 5 | 3 | (9.2Pa.s) |

It will be seen that the viscosity of the material of the invention is substantially lower that that of the plain mixture.

### X-Ray Diffraction Analysis.

X-ray diffraction analysis of a material according to the invention based on 50% magnesium hydroxide to 10% calcium hydroxide showed a significantly increased Portlandite content as compared with a simple mixture of the ingredients - the Portlandite content in the case of the mixture was 2.7%, while that for the composition of the invention was 9.8%. It is believed that this contributes to the low viscosity of the slurry composition of the invention.

## Claims

1. A method for the preparation of an aqueous slurry composition for the treatment of acidic waste water, comprising reacting magnesium oxide and calcium oxide together in water, **characterised by**:
(a) pre-heating the water to a temperature in the range of 38°C to 60°C;
(b) adding the calcium oxide to the water;
(c) stirring the calcium oxide and water;
(d) adding the magnesium oxide to the stirred calcium oxide and water;
(e) continuing to stir the resultant mixture while the mixture reaches boiling point; and
(f) subsequently cooling the composition.

2. A method as claimed in Claim 1, wherein the water is pre-heated to a temperature of 50°C.

3. A method as claimed in Claim 1 or 2, further comprising adding extra water to the reaction vessel to replace water lost through boiling.

4. A method as claimed in Claim 3, wherein said extra water is pre-heated to a temperature in the range of approximately 70-80°C.

5. A method as claimed in any preceding claim, wherein the reactants are stirred during the cooling process.

6. A method as claimed in any preceding claim, wherein the viscosity of the resultant composition is less than 50% of that of an aqueous mixture of calcium oxide and magnesium oxide.

7. A method as claimed in any preceding claim, wherein the resultant composition comprises approximately 10% by weight of portlandite.

8. A method of treating acidic waste water, comprising mixing with said water an aqueous slurry composition prepared by a method according to any preceding claim.

## Patentansprüche

1. Verfahren zur Herstellung einer wässrigen Schlammzusammensetzung für die Behandlung von saurem Abwasser, umfassend ein gemeinsames Umsetzen von Magnesiumoxid und Calciumoxid in Wasser, **gekennzeichnet durch**:
(a) Vorwärmen des Wassers auf eine Temperatur im Bereich von 38°C bis 60°C;
(b) Hinzufügen des Calciumoxids zu dem Wasser;
(c) Rühren des Calciumoxids und des Wassers;
(d) Hinzufügen des Magnesiumoxids zu dem gerührten Calciumoxid und Wasser;
(e) Fortführen des Rührens des resultierenden Gemischs, wobei dieses den Siedepunkt erreicht; und
(f) anschließend Abkühlen der Zusammensetzung.

2. Verfahren nach Anspruch 1, bei dem das Wasser auf eine Temperatur von 50°C erwärmt wird.

3. Verfahren nach Anspruch 1 oder 2, weiterhin umfassend das Hinzufügen von zusätzlichem Wasser in das Reaktionsgefäß, um Wasser, das durch Sieden verloren gegangen ist, zu ersetzen.

4. Verfahren nach Anspruch 3, bei dem das zusätzliche Wasser auf eine Temperatur im Bereich von etwa 70-80°C vorgewärmt wird.

5. Verfahren nach einem der vorgenannten Ansprüche, bei dem die Reaktanden während des Abkühlungsprozesses gerührt werden.

6. Verfahren nach einem der vorgenannten Ansprüche, bei dem die Viskosität der resultierenden Zusammensetzung weniger als 50% derjenigen eines wässrigen Gemischs aus Calciumoxid und Magnesiumoxid ist.

7. Verfahren nach einem der vorgenannten Ansprüche, bei dem die resultierende Zusammensetzung etwa 10 Gew.% Portlandit enthält.

8. Verfahren zur Behandlung sauren Abwassers, umfassend Mischen des Wassers mit einer wässrigen Schlammzusammensetzung, die nach einem Verfahren gemäß einem der vorgenannten Ansprüche hergestellt ist.

## Revendications

1. Procédé de préparation d'une composition de bouillie aqueuse pour le traitement d'eaux usées acides, comprenant l'opération consistant à faire réagir ensemble de l'oxyde de magnésium et de l'oxyde de calcium dans de l'eau, **caractérisé par** :
(a) le pré-chauffage de l'eau à une température se situant dans la plage de 38°C à 60°C ;
(b) l'addition de l'oxyde de calcium à l'eau ;
(c) l'agitation de l'oxyde de calcium et de l'eau ;
(d) l'addition de l'oxyde de magnésium à l'oxyde de calcium et l'eau agités ;
(e) la poursuite de l'agitation du mélange résultant alors que le mélange atteint le point d'ébullition ; et
(f) par la suite le refroidissement de la composition.

2. Procédé selon la revendication 1, dans lequel l'eau est pré-chauffée à une température de 50°C.

3. Procédé selon l'une des revendications 1 ou 2, comprenant en outre l'addition d'eau supplémentaire au récipient de réaction pour remplacer l'eau perdue par ébullition.

4. Procédé selon la revendication 3, dans lequel ladite eau supplémentaire est pré-chauffée à une température se situant dans la plage d'approximativement 70-80°C.

5. Procédé selon l'une quelconque des revendications précédentes, dans lequel les réactifs sont agités pendant le processus de refroidissement.

6. Procédé selon l'une quelconque des revendications précédentes, dans lequel la viscosité de la composition résultante est inférieure à 50% de celle d'un mélange aqueux d'oxyde de calcium et d'oxyde de magnésium.

7. Procédé selon l'une quelconque des revendications précédentes, dans lequel la composition résultante comprend approximativement 10 % en poids de portlandite.

8. Procédé de traitement d'eaux usées acides, comprenant le mélange avec ladite eau d'une composition de bouillie aqueuse préparée par un procédé selon l'une quelconque des revendications précédentes.
